# EUROPÄISCHE PATENTSCHRIFT

(11) **EP 1 748 545 B1**
(45) Veröffentlichungstag und Bekanntmachung des Hinweises auf die Patenterteilung: **11.11.2015**
(21) Anmeldenummer: 06012016.9
(22) Anmeldetag: 12.06.2006
(51) Int. Cl.: H02P 6/12, H02P 6/00, H02P 29/02, H02H 7/08

(54) **Elektronisch kommutierter Motor und Verfahren zur Steuerung eines elektronisch kommutierten Motors**
Electronically comutated motor and method for controling an electronically comutated motor
Moteur à commutation électronique et procédé de contrôle du moteur à commutation électronique

(30) Priorität: 28.07.2005 DE 102005036651
(43) Veröffentlichungstag der Anmeldung: 31.01.2007
(73) Patentinhaber: ebm-papst St. Georgen GmbH & Co. KG, 78112 St. Georgen (DE)
(72) Erfinder: Hahn, Alexander, 88605 Sauldorf (DE); Schmid, Harald, 78576 Emmingen (DE); Kisch, Michael, 78112 St. Georgen (DE)
(74) Vertreter: Raible, Tobias

(56) Entgegenhaltungen:
- US-A- 5 534 763
- US-A- 5 825 597

## Beschreibung

Die Erfindung betrifft einen elektronisch kommutierten Motor und ein Verfahren zur Steuerung eines elektronisch kommutierten Motors.

In einem elektronisch kommutierten Motor (ECM) kann ein während des Betriebes des Motors auftretender Kurzschluss die Beschädigung oder Zerstörung einer zugeordneten Endstufe zur Folge haben. Um eine derartige Beschädigung oder Zerstörung zu verhindern, muss die zugeordnete Endstufe gegen etwaige Fehlerfälle, insbesondere gegen Kurzschluss, abgesichert werden. Hierbei ist es wünschenswert, die zugeordnete Endstufe bzw. den ECM mittels einer geeigneten Schutzschaltung gegen einen Kurzschluss der Phasen des ECM, einen Kurzschluss gegen Masse, einen Kurzschluss gegen eine entsprechende Versorgungsspannung des ECM, einen Wicklungskurzschluss und/oder einen Endstufen-Kurzschluss abzusichern.

Die US 5 825 597 A zeigt einen elektronisch steuerbaren Motor mit einem Rotor und einem Stator. Der Stator hat Wicklungen, und ein Strom durch die Wicklungen erzeugt ein elektromagnetisches Feld zur Drehung des Rotors. Eine Endstufe ermöglicht einen Strom durch zwei der drei Wicklungen. Ein Strommessschaltkreis hat Stromüberwachungsschaltungen und Shuntwiderstände. Die Stromüberwachungsschaltungen vergleichen einen gemessenen Stromwert mit einem Schwellwert, um einen Überstrom zu bestimmen. Im Falle eines Überstroms wird über einen Timer die Zeitdauer des Überstroms ermittelt, und ein Überstromsignal zum Abschalten aller Leistungsschalter wird erst erzeugt, wenn der Überstrom eine vorgegebene, durch den Timer gemessene Zeitdauer auftritt. Hierdurch wird eine fehlerhafte Auslösung eines Überstromsignals verhindert.

Aufgabe der vorliegenden Erfindung ist es, einen neuen elektronisch kommutierten Motor sowie ein neues Verfahren zur Steuerung eines elektronisch kommutierten Motors bereit zu stellen.

Diese Aufgabe wird gelöst durch einen elektronisch kommutierten Motor gemäß Anspruch 1. Durch das Abschalten der Endstufe können diese und der Motor vorteilhafterweise vor einer Beschädigung oder Zerstörung durch den Überstrom geschützt werden.

Der Erfindung liegt die Erkenntnis zugrunde, dass ein in einem ECM auftretender Kurzschluss einen Überstrom an einer dem ECM zugeordneten Endstufe bewirkt. Ein derartiger Überstrom kann mit geeigneten Überstrom-Messgliedern erfasst werden, wobei in Reaktion auf die Erfassung des Überstroms eine Abschaltung der Endstufe bewirkt werden kann. Durch eine solche Abschaltung kann die Motorelektronik des ECM vor einer Beschädigung oder Zerstörung durch den Überstrom geschützt werden. Die Erfindung ist nicht auf einen bestimmten Motorentyp beschränkt, sondern eignet sich für Elektromotoren aller Art.

Eine bevorzugte Weiterbildung eines erfindungsgemäßen Motors ist Gegenstand des Anspruchs 2. Dementsprechend speichert das zugeordnete Halteglied das Überstromsignal während einer vorgegebenen Zeitspanne. Eine derartige Speicherung des Überstromsignals ermöglicht nach einem Abschalten der Endstufe eine Aufrechterhaltung des stromlosen Zustandes der Endstufe und des ECM zumindest über die vorgegebene Zeitspanne. Somit kann vermieden werden, dass die Endstufe den ECM z.B. bei Fortbestehen eines Kurzschlusses während der vorgegebenen Zeitspanne aufgrund eines Wegfalls des Überstromsignals wieder normal kommutiert und der ECM in den Normalbetrieb übergeht, wobei es zu einer Beschädigung oder Zerstörung der Endstufe oder des ECM kommen könnte.

Eine weitere bevorzugte Weiterbildung des erfindungsgemäßen Motors ist Gegenstand des Anspruchs 3. Hierbei wird das Halteglied von einem Resetglied durch Löschung des Überstromsignals zurückgesetzt. Hierdurch wird automatisch eine neue Auswertung bewirkt, durch die ermittelt wird, ob der Kurzschluss fortbesteht. Wenn der Kurzschluss fortbesteht, wird das Überstromsignal erneut erzeugt und die Endstufe bleibt abgeschaltet. Falls der Kurzschluss nicht mehr besteht, wird kein neues Überstromsignal mehr erzeugt, und der ECM kann zu seinem Normalbetrieb zurückkehren.

Eine weitere bevorzugte Weiterbildung des erfindungsgemäßen Motors ist Gegenstand des Anspruchs 13. Dementsprechend wird mindestens ein erstes Überstrom-Messglied mit einem zwischen den unteren Halbleiterschaltern der Endstufe und Masse angeordneten ersten Messwiderstand verschaltet, zur Erfassung eines ersten den Endstufenstrom beschreibenden Signals. Mindestens ein zweites Überstrom-Messglied wird mit einem zwischen einer Versorgungsspannungsquelle und den oberen Halbleiterschaltern der Endstufe angeordneten zweiten Messwiderstand verschaltet, zur Erfassung eines zweiten den Endstufenstrom beschreibenden Signals.

Durch die Verwendung von mindestens zwei separaten Überstrom-Messgliedern können verschiedene Überstromtypen zuverlässig erkannt werden. Beispielsweise kann das erste Überstrom-Messglied bevorzugt zur Erfassung eines Überstromes ausgebildet sein, welcher in Folge eines Kurzschlusses mit Masse auftritt, und das zweite Überstrom-Messglied kann bevorzugt zur Erfassung eines Überstromes ausgebildet sein, welcher in Folge eines Kurzschlusses mit einer entsprechenden Versorgungsleitung auftritt. Somit würde beispielsweise ein Überstrom, welcher in Folge eines Kurzschlusses mit der positiven Versorgungsleitung auftritt und nicht von dem ersten Überstrom-Messglied erfasst werden kann, nur von dem zweiten Überstrom-Messglied erfasst, und ein Überstrom, welcher in Folge eines Kurzschlusses mit Masse auftritt und somit nicht von dem zweiten Überstrom-Messglied erfasst werden kann, würde nur von dem ersten Überstrom-Messglied erfasst werden. In beiden Fällen würde jedoch eine Erfassung des Überstromes stattfinden, so dass jeweils eine Abschaltung der Endstufe bewirkt werden kann.

Die Aufgabe der vorliegenden Erfindung wird ebenfalls durch ein Verfahren zur Steuerung eines elektronisch kommutierten Motors gemäß Anspruch 18 gelöst.

Weitere Einzelheiten und vorteilhafte Weiterbildungen der Erfindung ergeben sich aus den im Folgenden beschriebenen und in den Zeichnungen dargestellten Ausführungsbeispielen. Es zeigt:
- Fig. 1: ein Blockdiagramm einer bevorzugten Ausführungsform eines ECM mit Kurzschlussabschaltung,
- Fig. 2: ein vereinfachtes Schaltbild eines ECM mit Kurzschlussabschaltung gemäß einer Ausführungsform der Erfindung,
- Fig. 3: ein vereinfachtes Schaltbild einer Vorrichtung zur Erfassung eines Überstroms an einer Endstufe und zur Erzeugung von Überstromsignalen zum Abschalten der Endstufe, gemäß einer Ausführungsform der Erfindung,
- Fig. 4: ein vereinfachtes Schaltbild einer Vorrichtung zur Erfassung eines Überstroms an einer oberen Seite einer Endstufe und zur Erzeugung von Überstromsignalen zum Abschalten der Endstufe, gemäß einer Ausführungsform der Erfindung, und
- Fig. 5: ein vereinfachtes Schaltbild einer Vorrichtung zum Abschalten von oberen und unteren Halbleiterschaltern einer Endstufe in Antwort auf ein Überstromsignal, gemäß einer Ausführungsform der Erfindung.

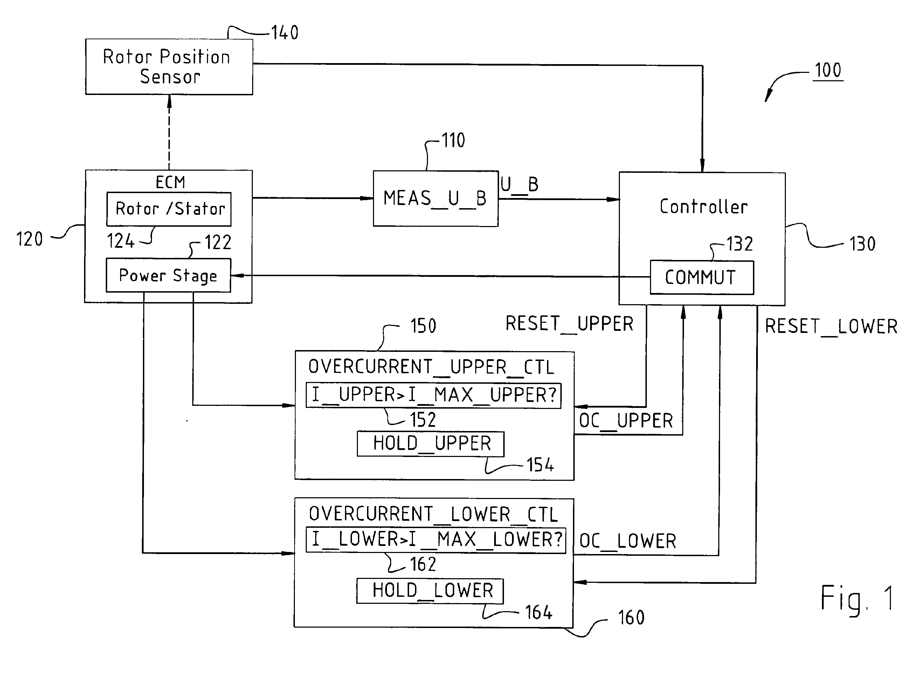

**Fig. 1** zeigt ein Blockdiagramm, welches die prinzipielle Funktionsweise einer Vorrichtung 100 zum Betrieb eines ECM 120 mit Kurzschlussabschaltung gemäß der vorliegenden Erfindung illustriert. Die erfindungsgemäße Vorrichtung 100 ist einerseits zur Erfassung eines aufgrund eines Kurzschlusses in dem ECM 120 entstehenden Überstroms ausgebildet. Andererseits ist die erfindungsgemäße Vorrichtung 100 dazu ausgebildet, in Reaktion auf die Erfassung des Überstroms den ECM 120 abzuschalten, um eine Beschädigung oder Zerstörung des ECM 120 durch den Überstrom zu verhindern.

Gemäß einer Ausführungsform der vorliegenden Erfindung umfasst die Vorrichtung 100 einen ECM 120 mit einer Rotor-Stator-Anordnung 124 (Rotor/Stator) mit einem Rotor und mindestens einem Statorstrang. Dem ECM 120 ist eine Endstufe 122 (Power Stage) zur Beeinflussung des Motorstroms in dem mindestens einen Statorstrang zugeordnet. Die Vorrichtung 100 umfasst auch eine Steuerung 130 (Controller), welche mit dem ECM 120 verbunden ist. Die Steuerung 130 umfasst eine Kommutierungssteuerung 132 (COMMUT) und ist eingangsseitig einerseits mit einem Spannungsmessglied 110 (MEAS_U_B) zur Messung der an der Endstufe 122 anliegenden Versorgungsspannung U_B, und andererseits mit mindestens einem Rotorstellungssensor 140 (Rotor Position Sensor) verbunden, welcher dem ECM 120 zugeordnet ist. Die Kommutierungssteuerung 132 erzeugt Kommutierungssignale für die Endstufe 122 des ECM 120 in Abhängigkeit von Rotorstellungssignalen, welche von dem Rotorstellungssensor 140 bereitgestellt werden.

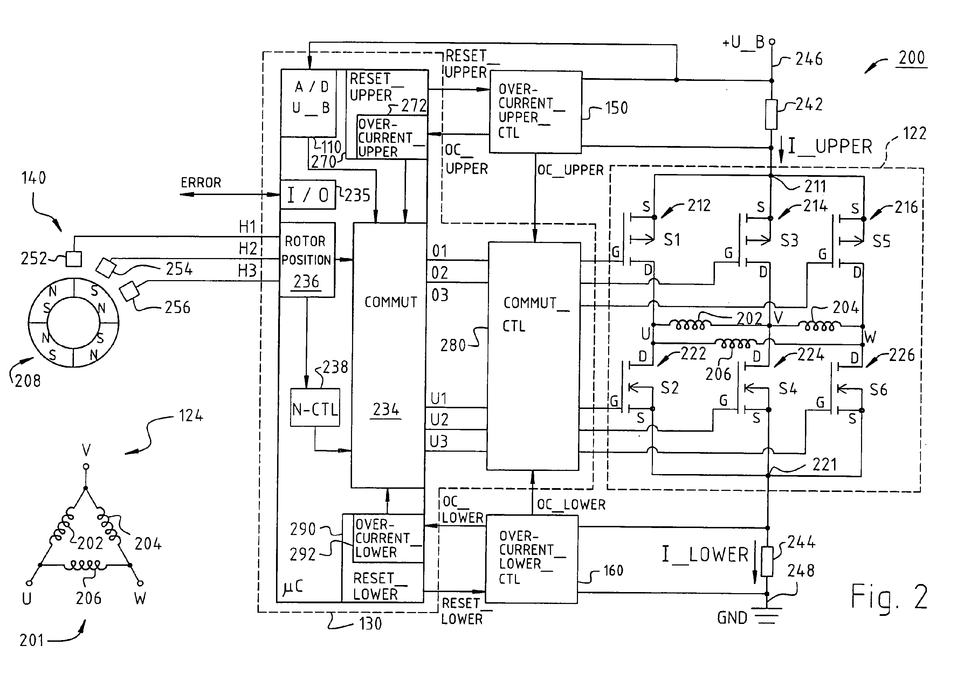

Die Endstufe 122 ist ausgangsseitig über eine erste Überstromsteuerung 150 (OVERCURRENT_UPPER_CTL) und eine zweite Überstromsteuerung 160 (OVERCURRENT_LOWER_CTL) mit der Steuerung 130 verbunden. Hierbei ist die erste Überstromsteuerung 150 mit einer Seite der Endstufe 122 verbunden, welche in Bezug auf eine entsprechende Versorgungsspannungszuführung für den ECM 120 das höhere Potential aufweist, beispielsweise +U_B (vgl. Fig. 2). Zur Vereinfachung wird diese Seite der Endstufe 122 im Folgenden als "obere Seite" bezeichnet. Die zweite Überstromsteuerung 160 ist mit einer Seite der Endstufe 122 verbunden, welche in Bezug auf die entsprechende Versorgungsspannungszuführung für den ECM 120 das niedrigere Potential aufweist, beispielsweise Masse (vgl. Fig. 2). Zur Vereinfachung wird diese Seite der Endstufe 122 im Folgenden als "untere Seite" bezeichnet.

**Fig. 2** zeigt ein Beispiel für die Endstufe 122 eines ECM mit drei Statorsträngen 202, 204, 206. Die Endstufe 122 hat die oberen MOSFETs 212, 214, 216, die über einen oberen Messwiderstand 242 an eine Versorgungsspannung U_B angeschlossen sind, und sie hat drei untere MOSFETs 222, 224, 226, die über einen unteren Messwiderstand 244 an Masse angeschlossen sind. Die Endstufe 122 wird nachfolgend bei Fig. 2 näher erläutert.

Die erste Überstromsteuerung 150 umfasst gemäß Fig. 1 ein Überstrom-Messglied 152 (I_UPPER > I_MAX_UPPER ?) zur Erfassung eines Überstroms an der "oberen Seite" der Endstufe 122, und ein Halteglied 154 (HOLD_UPPER) zum Erzeugen und Halten eines Überstromsignals OC_UPPER, welches der Steuerung 130 zugeführt wird.

Die zweite Überstromsteuerung 160 umfasst ein Überstrom-Messglied 162 (I_LOWER > I_MAX_LOWER ?) zur Erfassung eines Überstroms an der "unteren Seite" der Endstufe 122, und ein Halteglied 164 (HOLD_LOWER) zum Erzeugen und Halten eines Überstromsignals OC_LOWER, welches ebenfalls der Steuerung 130 zugeführt wird. Von der Steuerung 130 kann ein Signal RESET_UPPER zum Zurücksetzen des Halteglieds 154 der Überstromsteuerung 150 zugeführt werden. Von der Steuerung 130 kann ein Signal RESET_LOWER zum Zurücksetzen des Halteglieds 164 der Überstromsteuerung 160 zugeführt werden.

Im Betrieb wird dem mindestens einen Statorstrang der Rotor-Stator-Anordnung 124 des ECM 120 die Betriebsspannung U_B zugeführt. Hierbei werden die durch den mindestens einen Statorstrang fließenden Ströme durch die von der Kommutierungssteuerung 132 der Endstufe 122 bereit gestellten Kommutierungssignale gesteuert.

Beim Auftreten eines Überstroms an der Endstufe 122 wird dieser von dem Überstrom-Messglied 152 der Überstromsteuerung 150 und/oder dem Überstrom-Messglied 162 der Überstromsteuerung 160 erfasst. Hierbei wird in dem Überstrom-Messglied 152 ein an der "oberen Seite" der Endstufe 122 ermittelter Strom-Istwert (I_UPPER) mit einem maximal an der "oberen Seite" zulässigen Strom-Istwert (I_MAX_UPPER) verglichen. Falls der ermittelte Strom-Istwert den maximal zulässigen Strom-Istwert überschreitet (I_UPPER > I_MAX_UPPER), erfasst das Überstrom-Messglied 152 den Differenzwert dieser beiden Strom-Istwerte als Überstrom und führt ein Signal, welches diesen Überstrom kennzeichnet, dem Halteglied 154 zu.

In dem Überstrom-Messglied 162 wird ein an der "unteren Seite" der Endstufe 122 ermittelter Strom-Istwert (I_LOWER) mit einem maximal an der "unteren Seite" zulässigen Strom-Istwert (I_MAX_LOWER) verglichen. Falls der ermittelte Strom-Istwert an der "unteren Seite" den maximal an der "unteren Seite" zulässigen Strom-Istwert überschreitet (I_LOWER > I_MAX_LOWER), erfasst das Überstrom-Messglied 162 den Differenzwert dieser beiden Strom-Istwerte als Überstrom und führt ein Signal, welches diesen Überstrom kennzeichnet, dem Halteglied 164 zu.

Es wird darauf hingewiesen, dass erfindungsgemäß jedes der beiden Überstrom-Messglieder 152 bzw. 162 dazu ausgebildet sein kann, einen bestimmten Überstromtyp zu detektieren. Beispielsweise kann aufgrund der Anordnung der Überstromsteuerung 150 an der "oberen Seite" der Endstufe 122 das Überstrom-Messglied 152 bevorzugt zur Erfassung eines Überstromes ausgebildet sein, welcher in Folge eines Kurzschlusses mit einer entsprechenden Versorgungsleitung auftritt.

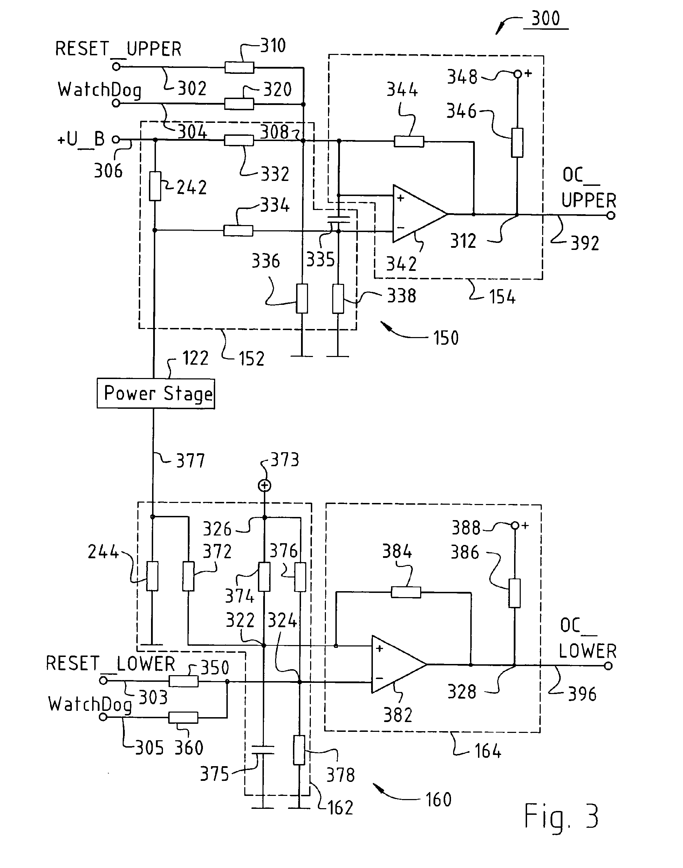

Analog kann aufgrund der Anordnung der Überstromsteuerung 160 an der "unteren Seite" der Endstufe 122 das Überstrom-Messglied 162 bevorzugt zur Erfassung eines Überstromes ausgebildet sein, welcher in Folge eines Kurzschlusses mit Masse auftritt (vgl. Fig. 2). Hierbei können jedoch sowohl das Überstrom-Messglied 152, wie auch das Überstrom-Messglied 162 dazu ausgebildet sein, Überströme zu detektieren, welche in Folge eines Kurzschlusses von einem oder mehrerer Halbleiterschalter der Endstufe 122 auftreten. Somit würden beispielsweise beim Auftreten eines Überstroms in Folge eines Kurzschlusses von einem oder mehrerer der Halbleiterschalter der Endstufe 122 beide Überstrom-Messglieder 152, 162 diesen Überstrom detektieren, während ein Überstrom, welcher in Folge eines Kurzschlusses mit der positiven Versorgungsleitung auftritt, nur von dem Überstrom-Messglied 152 erfasst wird und ein Überstrom, welcher in Folge eines Kurzschlusses mit Masse auftritt, nur von dem Überstrom-Messglied 162 erfasst wird. Geeignete beispielhafte Ausführungsformen entsprechender Überstrom-Messglieder werden unten stehend unter Bezugnahme auf Fig. 3 weiter beschrieben.

In Antwort auf die Erfassung eines Überstroms durch mindestens eines der Überstrom-Messglieder 152, 162 führt das Überstrom-Messglied 152 oder 162, welches den Überstrom erfasst, dem zugeordneten Halteglied ein Signal zu, welches den Überstrom kennzeichnet. Dementsprechend führt das Überstrom-Messglied 152 dem Halteglied 154 und/oder das Überstrom-Messglied 162 dem Halteglied 164 ein entsprechendes Signal zu. Das Halteglied 154 und/oder das Halteglied 164 erzeugt in Reaktion auf dieses Signal ein Überstromsignal und hält dieses, unabhängig vom weiteren zeitlichen Verlauf des empfangenen Signals. Hierbei erzeugt das Halteglied 154 das Überstromsignal OC_UPPER und das Halteglied 164 erzeugt das Überstromsignal OC_LOWER.

Jedes der Überstromsignale OC_UPPER und OC_LOWER wird der Steuerung 130 zugeführt, welche dazu ausgebildet ist, die Kommutierungssignale für die Endstufe 122 des ECM 120, die von der Kommutierungssteuerung 132 bereitgestellt werden, in Reaktion auf einen Empfang mindestens eines der Überstromsignale OC_UPPER bzw. OC_LOWER zu beeinflussen.

Diese Beeinflussung dient vorzugsweise dazu, den ECM 120 durch eine Abschaltung der Endstufe 122 auszuschalten, um eine Beschädigung des ECM 120 bzw. der Endstufe 122 durch den Überstrom zu verhindern. Hierzu beeinflusst die Kommutierungssteuerung 132 die von ihr bereit gestellten Kommutierungssignale gemäß einer bevorzugten Ausführungsform der Erfindung derart, dass alle Halbleiterschalter der Endstufe 122 ausgeschaltet werden, so dass kein Strom mehr in den mindestens einen Statorstrang des ECM 120 fließen kann und der ECM 120 somit ausgeschaltet wird. Die Funktionsweise der Vorrichtung 100 zur Abschaltung der Endstufe 122 wird unten stehend unter Bezugnahme auf Fig. 2 weiter beschrieben.

Gemäß einer bevorzugten Ausführungsform der Erfindung gibt die Steuerung 130 nach einer vorgegebenen Zeitdauer die Resetsignale RESET_UPPER und RESET_LOWER an die Überstromsteuerungen 150 und 160 zum Zurücksetzen der Halteglieder 154 und 164 aus. Durch ein Zurücksetzen der Halteglieder 154 und 164 erfolgt eine neue Auswertung des Eingangssignals dieser Halteglieder, welches den Überstrom kennzeichnet, um zu bestimmen, ob der Kurzschluss fortbesteht. Hierbei erzeugt das Halteglied 154 und/oder 164 in dem Fall, in dem an seinem Eingang weiterhin das den Überstrom kennzeichnende Signal anliegt, erneut das Überstromsignal OC_UPPER bzw. OC_LOWER und führt dieses der Steuerung 130 zu. In dem Fall, dass das den Überstrom kennzeichnende Signal nicht mehr am Eingang des Halteglieds 154 und/oder am Eingang des Haltegliedes 164 anliegt, wird kein neues Überstromsignal mehr erzeugt und der ECM 120 kann zu seinem Normalbetrieb zurückkehren.

Es wird darauf hingewiesen, dass ein Ausgeben der Resetsignale RESET_UPPER und RESET_LOWER auch selektiv erfolgen kann. Falls beispielsweise nur das Halteglied 164 ein Überstromsignal ausgibt, d.h., das Überstromsignal OC_LOWER, oder falls nur die Überstromsteuerung 160 Anwendung findet, ist es ausreichend, an die Überstromsteuerung 160 das Resetsignal RESET_LOWER auszugeben. Der Einfachheit halber kann jedoch ebenfalls jeweils an beide Überstromsteuerungen das entsprechende Resetsignal ausgegeben werden. Darüber hinaus können die Resetsignale nicht nur nach der vorgegebenen Zeitdauer, sondern auch in Antwort auf eine explizite Anweisung von der Steuerung 130 ausgegeben werden. Beispielsweise kann ein Benutzer eine hierfür vorgesehene Reset-Taste (nicht dargestellt) betätigen, um die Steuerung 130 anzuweisen, eine Zurücksetzung des Haltegliedes 154 und/oder des Haltegliedes 164 zu bewirken.

**Fig. 2** zeigt ein vereinfachtes Schaltbild einer bevorzugten Schaltung 200, mit welcher die Vorrichtung 100 zum Betrieb des ECM 120 mit Kurzschlussabschaltung von Fig. 1 gemäß einer ersten Ausführungsform realisiert wird. Dementsprechend umfasst die beispielhafte Schaltung 200 eine Vielzahl von Bauelementen, welche die Rotor-Stator-Anordnung 124 und die Endstufe 122 des ECM 120, den mindestens einen Rotorstellungssensor 140, die Steuerung 130, das Spannungsmessglied 110 und die Überstromsteuerungen 150 und 160 bilden.

Die Rotor-Stator-Anordnung 124 des ECM 120 ist hier schematisch mit einem Rotor 208 und einem Stator 201 dargestellt. Der Rotor 208 ist beispielhaft als ein permanentmagnetischer Rotor mit vier Magnetpolen dargestellt. Alternativ kann der Rotor 208 durch Zuführung von Strom erregt werden, so dass auf Permanentmagnete verzichtet werden kann. Der Stator 201 ist beispielhaft dreisträngig (dreiphasig) dargestellt, mit drei Statorsträngen (Statorphasen) 202, 204 und 206, die gemäß Fig. 2 als Dreieck geschaltet sind. Ebenso wäre eine Sternschaltung, eine separate Ansteuerung jedes Statorstrangs, oder auch eine andere Strangzahl möglich. Den Statorsträngen 202, 204 bzw. 206 ist jeweils ein Anschluss U, V bzw. W zugeordnet, über den die Statorstränge mit der Endstufe 122 verbunden sind.

Jeder der MOSFETs 212, 214, 216, 222, 224, 226 der Endstufe 122 ist mit einer Kommutierungssteuerung 280 (COMMUT_CTRL) verbunden, welche eingangsseitig mit einem Kommutierungssignalgenerator 234 (COMMUT) verbunden ist. Gemäß einer bevorzugten Ausführungsform der Erfindung bilden die Kommutierungssteuerung 280 und der Kommutierungssignalgenerator 234 zusammen die Kommutierungssteuerung 132 der Steuerung 130 aus Fig. 1.

Der Anschluss U des Statorstrangs 202 ist über den oberen Halbleiterschalter 212 (S1) und den oberen Messwiderstand 242 mit +U_B verbunden. Über den unteren Halbleiterschalter 222 (S2) der Endstufe 122 und den Messwiderstand 244 ist er mit Masse GND verbunden. Der Anschluss V des Statorstrangs 204 ist analog über den oberen Halbleiterschalter 214 (S3) und den unteren Halbleiterschalter 224 (S4) der Endstufe 122 mit +U_B bzw. GND verbunden. Der Anschluss W des Statorstrangs 206 ist analog mit dem oberen Halbleiterschalter 216 (S5) und dem unteren Halbleiterschalter 226 (S6) der Endstufe 122 mit +U_B bzw. GND verbunden.

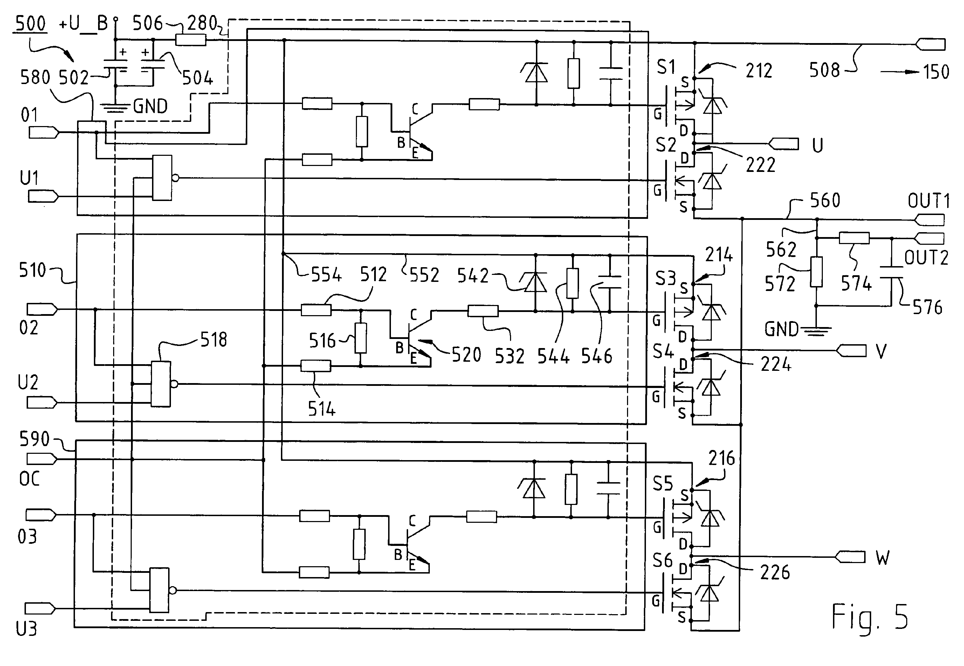

Gemäß einer bevorzugten Ausführungsform der vorliegenden Erfindung werden die oberen und unteren Halbleiterschalter 212, 214, 216, 222, 224 und 226 mit Feldeffekttransistoren vom Typ MOSFET oder IGBT (Isolated Gate Bipolar Transistor) realisiert, welche integrierte Freilaufdioden (vgl. Fig. 5) aufweisen, deren Durchlassspannung generell zwischen 0,7 und 1,4 V liegt. In Fig. 2 sind die oberen Halbleiterschalter 212, 214 und 216 als P-Kanal MOSFETs und die unteren Halbleiterschalter 222, 224 und 226 als N-Kanal MOSFETs ausgeführt, wobei die Anschlüsse U, V und W jeweils mit den Drain-Anschlüssen D der zugeordneten oberen und unteren MOSFETs verbunden sind. Die Gate-Anschlüsse G der oberen und unteren MOSFETs sind mit der Kommutierungssteuerung 280 verbunden. Jeder Gate-Anschluss G der unteren MOSFETs 222, 224 und 226 ist ebenfalls an die Kommutierungssteuerung 280 angeschlossen. Die Kommutierungssteuerung 280 wird unten stehend beispielhaft unter Bezugnahme auf FIG. 5 weiter beschrieben.

Die Source-Anschlüsse S der oberen MOSFETs 212, 214 und 216 sind mit einem Knotenpunkt 211 an der "oberen Seite" der Endstufe 122 verbunden. Der Knotenpunkt 211 ist über einen Widerstand 242, welcher nachfolgend als "oberer Messwiderstand" bezeichnet wird, mit +U_B verbunden. In Fig. 2 ist der obere Messwiderstand 242 über eine als Zuleitung 246 mit +U_B (U_B) verbunden.

Die Source-Anschlüsse S der unteren MOSFETs 222, 224 und 226 sind über einen Knotenpunkt 221 an der "unteren Seite" der Endstufe 122 miteinander verbunden. Der Knotenpunkt 221 ist über einen unteren Messwiderstand 244 mit Masse GND verbunden. In Fig. 2 ist der untere Messwiderstand 244 über eine nachfolgend als "Ableitung" bezeichnete Leitung 248 mit Masse GND verbunden.

Der Knotenpunkt 221 und die Ableitung 248 sind mit dem Eingang der Überstromsteuerung 160 verbunden. Der Ausgang der Überstromsteuerung 160 ist mit der Kommutierungssteuerung 280 und mit einer Überstrom-Erkennungseinheit 292 (OVERCURRENT_LOWER) sowie einem Resetglied 290 (RESET_LOWER) verbunden. Es wird jedoch darauf hingewiesen, dass die Überstrom-Erkennungseinheit 292 nur beispielhaft als Teil des Resetgliedes 290 dargestellt ist und auch unabhängig von ihr ausgebildet werden kann. Das Resetglied 290 ist ausgangsseitig auf die Überstromsteuerung 160 zurück gekoppelt, und die Überstrom-Erkennungseinheit 292 ist ausgangsseitig mit dem Kommutierungssignalgenerator 234 der Steuerung 130 verbunden.

Der Knotenpunkt 211 und die Zuleitung 246 sind mit einer Eingangsseite der Überstromsteuerung 150 verbunden. Die Ausgangsseite der Überstromsteuerung 150 ist einerseits mit der Kommutierungssteuerung 280, und andererseits mit einer Überstrom-Erkennungseinheit 272 (OVERCURRENT_UPPER) sowie einem Resetglied 270 (RESET_UPPER) verbunden. Es wird jedoch darauf hingewiesen, dass die Überstrom-Erkennungseinheit 272 nur beispielhaft als Teil des Resetgliedes 270 dargestellt ist und auch unabhängig von ihr ausgebildet werden kann. Das Resetglied 270 ist ausgangsseitig auf die Überstrom-steuerung 150 zurück gekoppelt, und die Überstromerkennungseinheit 272 ist ausgangsseitig mit dem Kommutierungssignalgenerator 234 der Steuerung 130 verbunden.

Die Zuleitung 246 ist auch mit dem Spannungsmessglied 110 verbunden, welches beispielhaft als ein A/D-Wandler dargestellt ist. Wie in Fig. 2 dargestellt ist, kann die Funktionalität dieses A/D-Wandlers 110 durch die Steuerung 130 ausgebildet werden, welche darüber hinaus eine Eingabe-/Aus-gabe-einrichtung 235 (I/O) zur Ausgabe eines Fehlersignals ERROR aufweist. Zweckmäßig ist die Steuerung 130 (vgl. Fig. 1) als Mikrocontroller ausgebildet.

Die Steuerung 130 ist über eine Eingabeeinrichtung 236 (Rotor Position) mit dem Rotorstellungssensor 140 verbunden, welcher beispielhaft durch drei Hallsensoren 252, 254 und 256 realisiert wird. Wie aus Fig. 2 ersichtlich, ist der Hallsensor 252 mit einem Eingang H1 der Eingabeeinrichtung 236 verbunden. Der Hallsensor 254 ist mit einem Eingang H2 verbunden und um 60° el. versetzt zu dem Hallsensor 252 angeordnet. Der Hallsensor 256 ist mit einem Eingang H3 verbunden und um 60° el. versetzt zu dem Hallsensor 254, bzw. um 120° el. versetzt zu dem Hallsensor 252, angeordnet. Die Eingabeeinrichtung 236 ist einerseits mit dem Kommutierungssignalgenerator 234 und andererseits mit einem Drehzahlregler 238 (N_CTL) verbunden. Der Drehzahlregler 238 ist seinerseits ebenfalls mit dem Kommutierungssignalgenerator 234 verbunden und steuert dessen Signale.

### Arbeitsweise

Im Betrieb der Vorrichtung 200 wird die Versorgungsspannung U_B zur Bestromung des Stators 201 an die Endstufe 122 angelegt. Die Versorgungsspannung U_B ist vorzugsweise eine im Wesentlichen konstante Gleichspannung, welche von einem Netzgerät oder einer Batterie erzeugt und unter Verwendung der Statorstränge 202, 204 und 206 in Drehungen des Rotors 208 umgewandelt wird. Die hierbei entstehenden Hallsignale werden über die Hallsensoren 252, 254 und 256 dem Drehzahlregler 238 zugeführt, welcher aus den Hallsignalen einen Drehzahl-Istwert des Rotors 208 bestimmt. Der Drehzahlregler 238 erzeugt unter Verwendung des Drehzahl-Istwerts eine Drehzahlregelgröße, welche dem Kommutierungssignalgenerator 234 zugeführt wird.

Der Kommutierungssignalgenerator 234 erzeugt in Abhängigkeit von der Drehzahlregelgröße und von den Hallsignalen H1, H2, H3 Kommutierungssignale zur Ansteuerung der Endstufe 122, welche über die Kommutierungssteuerung 280 den Gate-Anschlüssen G der oberen und unteren MOSFETs zugeführt werden. Hierbei können den Kommutierungssignalen entsprechende PWM- (Pulsweitenmodulations-) Signale zur Ansteuerung der MOSFETs überlagert werden, so dass unter Verwendung dieser MOSFETs die durch die Statorstränge 202, 204 und 206 fließenden Ströme gesteuert werden, um ein sich drehendes Magnetfeld zum Antrieb des Rotors 208 zu erzeugen. Zur Kommutierung der Motorströme werden die oberen und unteren MOSFETs durch die Kommutierungssignale ein- und ausgeschaltet, um die Ströme in den Statorsträngen 202, 204 und 206 zu steuern.

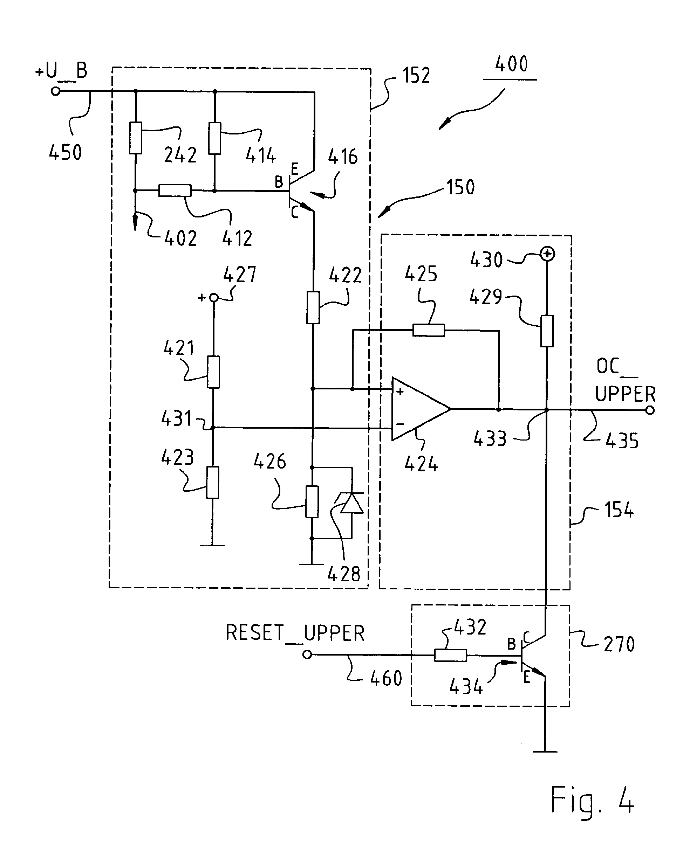

Im Betrieb der Vorrichtung 200 wird die an dem oberen Messwiderstand 242 abfallende Spannung mit der Überstromsteuerung 150 gemessen, um eine Erfassung eines an der "oberen Seite" der Endstufe 122 auftretenden Überstroms zu ermöglichen, wie unten stehend unter Bezugnahme auf die Fig. 3 und 4 im Detail beschrieben wird. Die über dem oberen Messwiderstand 242 abfallende Spannung kennzeichnet den Strom-Istwert I_UPPER am Knotenpunkt 211 und wird mit einem maximal am Knotenpunkt 211 zulässigen Stromwert I_MAX_UPPER verglichen. Für den Fall, dass der Strom-Istwert am Knotenpunkt 211 den maximal am Knotenpunkt 211 zulässigen Stromwert überschreitet, bedeutet dies, dass am Knotenpunkt 211 ein Überstrom auftritt.

Falls die Überstromsteuerung 150 einen Überstrom am Knotenpunkt 211 erfasst, erzeugt sie ein Überstromsignal OC_UPPER (vgl. Fig. 1) und gibt dieses an die Überstrom-Erkennungseinheit 272 und die Kommutierungssteuerung 280 aus.

Mit der Überstromsteuerung 160 wird die an dem unteren Messwiderstand 244 abfallende Spannung gemessen, um eine Erfassung eines an der "unteren Seite" der Endstufe 122 auftretenden Überstroms zu ermöglichen, wie unten stehend unter Bezugnahme auf die Fig. 3 im Detail beschrieben wird. Die über dem unteren Messwiderstand 244 abfallende Spannung kennzeichnet den Strom-Istwert I_LOWER am Knotenpunkt 221 und wird mit einem maximal am Knotenpunkt 221 zulässigen Stromwert I_MAX_LOWER verglichen. Für den Fall, dass der Strom-Istwert am Knotenpunkt 221 den maximal am Knotenpunkt 221 zulässigen Stromwert überschreitet, bedeutet dies, dass dort ein Überstrom auftritt. Falls die Überstromsteuerung 160 einen Überstrom am Knotenpunkt 221 erfasst, erzeugt sie ein Überstromsignal OC_LOWER (vgl. Fig. 1) und gibt dieses an die Überstrom-Erkennungseinheit 292 und die Kommutierungssteuerung 280 aus.

Bei Empfang des Überstromsignals OC_UPPER durch die Überstrom-Erkennungseinheit 272 wird das Resetglied 270 initialisiert. Hierbei kann eine Zeitnahme gestartet werden, um zu bestimmen, wann eine vorgegebene Zeitspanne abgelaufen ist, nach welcher das Resetglied 270 ein entsprechendes Rückstellsignal RESET_UPPER an die Überstromsteuerung 150 zur Rücksetzung ausgibt. Bei Empfang des Überstromsignals OC_LOWER durch die Überstrom-Erkennungseinheit 292 wird das Resetglied 290 initialisiert, wobei ebenso eine Zeitnahme gestartet werden kann, um zu bestimmen, wann die vorgegebene Zeitdauer abgelaufen ist, nach welcher das Resetglied 290 ein entsprechendes Rückstellsignal RESET_LOWER an die Überstromsteuerung 160 zu deren Rücksetzung ausgibt.

Alternativ hierzu kann eine Initialisierung des Resetgliedes 270 und/oder des Resetgliedes 290 durch eine externe Anweisung, beispielsweise das Betätigen einer Reset-Taste durch einen Anwender, über die Steuerung 130 erfolgen. Hierzu wird im Falle der Erfassung des Überstromes das Fehlersignal ERROR über die Eingabe-/Ausgabeeinrichtung 235 ausgegeben. In Reaktion auf die Ausgabe des Fehlersignals ERROR kann der Anwender entsprechende, geeignete Maßnahmen zur Fehleranalyse und Behebung des Kurzschlusses ergreifen.

Gemäß einer bevorzugten Ausführungsform der Erfindung beeinflusst die Kommutierungssteuerung 280 bei Empfang des Überstromsignals OC_UPPER und/oder des Überstromsignals OC_LOWER die von dem Kommutierungssignalgenerator 234 erzeugten Kommutierungssignale derart, dass die Endstufe 122 abgeschaltet wird, damit der Stator 201 in den stromlosen Zustand übergeht. Hierbei werden vorzugsweise die Kommutierungssignale derart von der Kommutierungssteuerung 280 gesetzt, dass alle oberen und unteren MOSFETs 212, 214, 216, 222, 224 und 226 nichtleitend geschaltet werden, so dass die Endstufe 122 abgeschaltet wird. Da somit kein Strom mehr in die Statorstränge 202, 204 und 206 fließen kann, klingt der Motorstrom in dem Stator 201 ab, und dieser geht in den stromlosen Zustand über.

Durch das Abschalten der Endstufe 122 und somit des ECM 120 werden die Endstufe 122 und der Motor vor einer Beschädigung oder Zerstörung durch den entstandenen Überstrom geschützt.

Wie unten unter Bezugnahme auf Fig. 3 im Detail beschrieben wird, wird das Überstromsignal OC_UPPER und/oder das Überstromsignal OC_LOWER nun vorzugsweise unabhängig vom Vorhandensein eines entsprechenden Überstroms an der Endstufe 122 aufrecht gehalten bzw. gespeichert, so dass der ECM 120 nicht wieder in den Normalbetrieb übergehen kann.

Um einen Übergang in den Normalbetrieb zu ermöglichen, muss die Überstromsteuerung 150 und/oder die Überstromsteuerung 160 durch das Rückstellsignal RESET_UPPER bzw. RESET_LOWER zurückgesetzt werden. Dies erfolgt entweder nach Ablauf der vorgegebenen Zeitdauer oder in Reaktion auf eine entsprechende Anweisung durch die Steuerung 130 (vgl. Fig. 1). Falls das Zurücksetzen erfolgt, obwohl der Überstrom fortbesteht, wird erneut ein Überstromsignal OC_UPPER und/oder OC_LOWER von der Überstromsteuerung 150 bzw. 160 erzeugt und die Endstufe 122 bleibt abgeschaltet. Falls jedoch kein Überstrom mehr vorliegt, wird die Endstufe 122 wieder normal kommutiert und der ECM 120 geht in den Normalbetrieb über.

**Fig. 3** zeigt ein vereinfachtes Schaltbild einer Vorrichtung 300 zur Erfassung eines Überstroms an einer Endstufe und zur Erzeugung von Überstromsignalen zum Abschalten der Endstufe. Wie in Fig. 3 angedeutet ist, entspricht diese Endstufe beispielhaft der Endstufe 122 von Fig. 1 und 2, welche an ihrer "oberen Seite" mit dem Messwiderstand 242 verbunden ist, welcher mit der Überstromsteuerung 150 verschaltet ist. An ihrer "unteren Seite" ist die Endstufe 122 mit dem Messwiderstand 244 verbunden, welcher mit der Überstromsteuerung 160 verschaltet ist. Die Überstromsteuerung 150 weist gemäß Fig. 1 das Überstrom-Messglied 152 und das Halteglied 154 auf und die Überstromsteuerung 160 weist gemäß Fig. 1 das Überstrom-Messglied 162 und das Halteglied 164 auf. Beispielhafte Schaltungen zur Realisierung der Überstromsteuerungen 150, 160 werden nachfolgend im Detail beschrieben.

Die beispielhafte Schaltung zur Realisierung der Überstromsteuerung 150 weist eingangsseitig drei Leitungen 302, 304, 306 auf. Die Leitung 302 ist über einen Widerstand 310 mit einem Knotenpunkt 308 verbunden. Die Leitung 304 ist über einen Widerstand 320 ebenfalls mit dem Knotenpunkt 308 verbunden. Die Leitung 306 ist einerseits über den Messwiderstand 242 mit der "oberen Seite" der Endstufe 122, und andererseits über einen Widerstand 332 mit dem Knotenpunkt 308 verbunden. Der Knotenpunkt 308 ist einerseits über einen Widerstand 336 mit Masse und andererseits mit dem nicht-invertierenden Eingang (+) eines Differenzverstärkers 342 verbunden. Der invertierende Eingang (-) des Differenzverstärkers 342 ist einerseits über einen Widerstand 334 mit der "oberen Seite" der Endstufe 122, und andererseits über einen Widerstand 338 mit Masse verbunden. Darüber hinaus ist der invertierende Eingang (-) des Differenzverstärkers 342 über einen Kondensator 335 mit seinem nicht-invertierenden Eingang (+) verbunden. Der Kondensator 335 und die Widerstände 242, 332, 334, 336 und 338 bilden gemäß einer bevorzugten Ausführungsform das Überstrom-Messglied 152.

Der Ausgang des Differenzverstärkers 342 ist einerseits mit einem Knotenpunkt 312 und einer Leitung 392 verbunden, und andererseits über einen Widerstand 344 auf seinen nicht-invertierenden Eingang (+) zurück gekoppelt. Der Knotenpunkt 312 ist über einen Widerstand 346 mit einer Bezugsspannungsquelle 348 verbunden. Der Differenzverstärker 342, die Widerstände 344, 346 und die Bezugsspannungsquelle 348 bilden gemäß einer bevorzugten Ausführungsform das Halteglied 154.

Die beispielhafte Schaltung zur Realisierung der Überstromsteuerung 160 weist eingangsseitig zwei Leitungen 303, 305 auf. Die Leitung 303 ist über einen Widerstand 350 mit einem Knotenpunkt 324 verbunden. Die Leitung 305 ist über einen Widerstand 360 ebenfalls mit dem Knotenpunkt 324 verbunden. Der Knotenpunkt 324 ist einerseits mit dem invertierenden Eingang (-) eines Differenzverstärkers 382, und andererseits über einen Widerstand 378 mit Masse verbunden. Darüber hinaus ist der Knotenpunkt 324 über einen Widerstand 376 mit einem Knotenpunkt 326 verbunden. Der Knotenpunkt 326 ist einerseits mit einer Bezugsspannungsquelle 373 und andererseits über einen Widerstand 374 mit einem Knotenpunkt 322 verbunden, welcher mit dem nicht-invertierenden Eingang (+) des Differenzverstärkers 382 verbunden ist. Der Knotenpunkt 322 ist über einen Kondensator 375 mit Masse, und über einen Widerstand 372 mit einer Leitung 377 verbunden, welche die "untere Seite" der Endstufe 122 mit dem Messwiderstand 244 verbindet. Der Kondensator 375 und die Widerstände 244, 372, 374, 376 und 378 bilden gemäß einer bevorzugten Ausführungsform das Überstrom-Messglied 162.

Der Ausgang des Differenzverstärkers 382 ist einerseits mit einem Knotenpunkt 328 und einer Leitung 396 verbunden, und andererseits über einen Widerstand 384 auf seinen nicht-invertierenden Eingang (+) zurück gekoppelt. Der Knotenpunkt 328 ist über einen Widerstand 386 mit einer Bezugsspannungsquelle 388 verbunden. Der Differenzverstärker 382, die Widerstände 384, 386 und die Bezugsspannungsquelle 388 bilden gemäß einer bevorzugten Ausführungsform das Halteglied 164.

Alle Bezugsspannungsquellen 348, 373, 388 erzeugen vorzugsweise ein Gleichspannungssignal mit einer Amplitude von +5V. Dementsprechend können alle Bezugsspannungsquellen 348, 373, 388 durch eine geeignete, einzelne Konstantspannungsquelle realisiert werden.

Beim Betrieb der Vorrichtung 300 wird eine über dem Messwiderstand 242 abfallende Spannung abgegriffen und über einen von den Widerständen 334 und 338 gebildeten ersten Spannungsteiler dem invertierenden Eingang (-) des Differenzverstärkers 342 zugeführt. Über die Leitung 306 und einen von den Widerständen 332 und 336 gebildeten zweiten Spannungsteiler wird dem nicht-invertierenden Eingang (+) des Differenzverstärkers 342 die Versorgungsspannung +U_B zugeführt, welche durch den Kondensator 335 geglättet wird.

Der erste und zweite Spannungsteiler sind erfindungsgemäß derart ausgebildet, dass das Potenzial an dem invertierenden Eingang (-) des Differenzverstärkers 342 im Normalbetrieb größer ist als das Potenzial an seinem nicht-invertierenden Eingang (+), so dass der Ausgang des Differenzverstärkers 342 im Normalbetrieb niederohmig ist. Wenn nun an dem Messwiderstand 242 ein Überstrom auftritt, wird durch den zweiten Spannungsteiler das Potenzial an dem nicht-invertierenden Eingang (+) vergrößert, so dass das Potenzial am nicht-invertierenden Eingang (+) des Differenzverstärkers 342 größer als das Potenzial am invertierenden Eingang (-) wird. Dadurch wird der Ausgang des Differenzverstärkers 342 auf TRISTATE geschaltet und wird somit hochohmig, wodurch ein Überstromsignal OC_UPPER erzeugt wird, welches über die Leitung 392 ausgegeben wird.

Das Überstromsignal OC_UPPER wird vorzugsweise über den Widerstand 344 zu dem nicht-invertierenden Eingang (+) des Differenzverstärkers 342 zurück gekoppelt. Damit hierbei eine Selbsthaltung des Überstromsignals OC_UPPER durch den Differenzverstärker 342 ermöglicht wird, muss das Potenzial an seinem nicht-invertierenden Eingang (+) größer bleiben als das Potenzial an seinem invertierenden Eingang (-). Deshalb wird das zurück gekoppelte Überstromsignal OC_UPPER mit einem von der Bezugsspannungsquelle 348 über den Widerstand 346 bereit gestellten Bezugsspannungssignal kombiniert. Hierbei ist dieses Bezugsspannungssignal derart gestaltet, dass es allein nicht ausreichend ist, die Erzeugung des Überstromsignals OC_UPPER durch den Differenzverstärker 342 zu bewirken, sondern nur in Kombination mit dem Überstromsignal OC_UPPER. Somit wird erreicht, dass der Differenzverstärker 342 das Überstromsignal OC_UPPER nur dann erzeugt, wenn an dem Messwiderstand 242 ein Überstrom gemessen wird.

Eine Selbsthaltung des Halteglieds 154 durch eine Speicherung des Überstromsignals OC_UPPER ermöglicht eine Aufrechterhaltung des stromlosen Zustandes der Endstufe 122 und des zugeordneten ECMs, d.h. ECM 120 von Fig. 2, zumindest über einen vorgegebenen Zeitraum. Somit kann vermieden werden, dass die Endstufe 122 den ECM 120 bei Fortbestehen eines Kurzschlusses während des vorgegebenen Zeitraums aufgrund eines Wegfalls des Überstromsignals OC_UPPER wieder normal kommutiert und der ECM 122 in den Normalbetrieb übergeht, wobei es zu einer Beschädigung oder Zerstörung der Endstufe 122 oder des ECM 120 kommen könnte.

Über die Leitung 304 kann die Versorgungsspannung +U_B mit einem sogenannten Watchdog-Signal verknüpft werden, welches dazu dient, die Betriebsbereitschaft der Steuerung 130 gemäß den Fig. 1 und 2 zu signalisieren. Hierbei ist der Pegel des Watchdog-Signals vorzugsweise "HIGH", wenn die Steuerung 130 nicht betriebsbereit ist. Somit kann für den Fall, dass die Steuerung 130 nicht betriebsbereit ist, durch Verknüpfung der Versorgungsspannung +U_B mit dem Watchdog-Signal erfindungsgemäß ein ausreichend großes Potenzial am nicht-invertierenden Eingang (+) des Differenzverstärkers 342 erzeugt werden, um die Erzeugung des Überstromsignals OC_UPPER zu bewirken. Für den Fall, dass die Steuerung 130 betriebsbereit ist, ist das Watchdog-Signal bevorzugt "LOW" und hat somit keinen Einfluss auf die Erzeugung des Überstromsignals OC_UPPER.

Über die Leitung 302 kann die Versorgungsspannung +U_B mit einem Resetsignal RESET_UPPER verknüpft werden, welches dazu dient, das Halteglied 154 zurück zu setzen. Durch das Resetsignal RESET_UPPER muss das Potenzial an dem nicht-invertierenden Eingang (+) des Differenzverstärkers 342 derart verringert werden, dass das Potenzial an seinem invertierenden Eingang (-) im Vergleich hierzu größer wird, und der Ausgang des Differenzverstärkers 342 somit auf niederohmig zurück schaltet. Hierzu kann das Potenzial an dem nicht-invertierenden Eingang (+) des Differenzverstärkers 342 durch das Resetsignal RESET_UPPER beispielsweise auf Masse gezogen werden. Ein ähnlicher Effekt kann durch das Watchdog-Signal erreicht werden.

Durch ein Zurücksetzen des Halteglieds 154 wird automatisch eine neue Auswertung bewirkt, durch die bestimmt wird, ob der erfasste Überstrom und somit der diesem zugrunde liegende Kurzschluss fortbesteht. Wenn der Kurzschluss fortbesteht, wird das Überstromsignal OC_UPPER erneut erzeugt, so dass die Endstufe 122 abgeschaltet bleibt. Falls der Kurzschluss nicht mehr besteht, wird das Überstromsignal OC_UPPER nicht mehr erzeugt und der ECM 120 kann zu seinem Normalbetrieb zurückkehren, ohne dass hierzu eine weiterführende Überprüfung des ECM 120 erforderlich ist.

Analog wird eine Spannung am Messwiderstand 244 erfasst und über den Widerstand 372 mit einem von der Bezugsspannungsquelle 373 erzeugten Bezugsspannungssignal verknüpft. Das verknüpfte Signal wird durch den Kondensator 375 geglättet und dem nicht-invertierenden Eingang (+) des Differenzverstärkers 382 zugeführt. Dem invertierenden Eingang (-) des Differenzverstärkers 382 wird über einen von den Widerständen 376 und 378 gebildeten Spannungsteiler das von der Bezugsspannungsquelle 373 bereit gestellte Bezugsspannungssignal zugeführt. Hierbei wird an dem invertierenden Eingang (-) des Differenzverstärkers 382 ein im Wesentlichen konstantes Potenzial erzeugt, welches im Normalbetrieb größer ist als das Potenzial an seinem nicht-invertierenden Eingang (+), so dass der Ausgang des Differenzverstärkers 382 im Normalbetrieb niederohmig ist.

Wenn nun an dem Messwiderstand 244 ein Überstrom auftritt, wird das Potenzial an dem nicht-invertierenden Eingang (+) über den Widerstand 372 derart vergrößert, dass das Potenzial am nicht-invertierenden Eingang (+) des Differenzverstärkers 382 größer als das Potenzial am invertierenden Eingang (-) wird. Dadurch wird der Ausgang des Differenzverstärkers 382 auf TRISTATE geschaltet und wird somit hochohmig, wodurch ein Überstromsignal OC_LOWER erzeugt wird, welches über die Leitung 396 ausgegeben wird.

Der Differenzverstärker 382 wird zur Signalerzeugung und zur Selbsthaltung analog zu dem Differenzverstärker 342 betrieben, d.h., mit einem über den Widerstand 384 zurück gekoppelten Rückkopplungssignal, welches mit einem von der Bezugsspannungsquelle 388 über einen Widerstand 386 bereit gestellten Bezugsspannungssignal verknüpft wird. Die Überstromsteuerung 160 kann auch mit dem Resetsignal RESET_LOWER, zurückgesetzt werden, und analog zu dem oben Beschriebenen kann bei der Überstromsteuerung 160 auch ein Watchdog-Signal Anwendung finden. Da die Überstromsteuerung 160 diese Signale ähnlich wie die Überstromsteuerung 150 verarbeitet, wird auf eine detaillierte Beschreibung verzichtet.

Beide Überstromsteuerungen 150 ,160 ermöglichen eine Erfassung von Überströmen, welche bei Kurzschlüssen in der Motorwicklung sowie in den Brückentransistoren (d.h., den MOSFETs 212, 214, 216, 222, 224 und 226 der Fig. 2) der Endstufe 122 auftreten. Die Überstromsteuerung 150 ist zur Erfassung von Überströmen ausgebildet, welche durch Kurzschlüsse mit der Leitung 306 für die Zufuhr der Versorgungsspannung U_B auftreten. Die Überstromsteuerung 160 dient zur Erfassung von Überströmen, welche durch Kurzschlüsse mit Masse auftreten.

Im Folgenden werden beispielhafte Werte für einzelne Komponenten der beispielhaften Schaltungen zur Realisierung der Überstromsteuerungen 150, 160 gemäß einer bevorzugten Ausführungsform angegeben:

| | |
|---|---|
| Widerstand 310 | 1 kOhm |
| Widerstand 332 | 8,2 kOhm |
| Widerstand 334 | 9,1 kOhm |
| Widerstand 336 | 1 kOhm |
| Widerstand 338 | 1 kOhm |
| Widerstand 344 | 2,2 kOhm |
| Widerstand 346 | 4,7 kOhm |
| Kondensator 335 | 1 nF |
| Widerstand 350 | 4,7 kOhm |
| Widerstand 372 | 4,7 kOhm |
| Widerstand 374 | 4,7 kOhm |
| Widerstand 376 | 4,7 kOhm |
| Widerstand 378 | 4,7 kOhm |
| Widerstand 384 | 4,7 kOhm |
| Widerstand 386 | 4,7 kOhm |
| Kondensator 375 | 1 nF |

**Fig. 4** zeigt ein vereinfachtes Schaltbild einer Vorrichtung 400 zur Erfassung eines Überstroms an der "oberen Seite" einer Endstufe, beispielsweise der Endstufe 122 aus den Fig. 1 und 2, und zur Erzeugung eines Überstromsignals zum Abschalten der Endstufe gemäß einer weiteren bevorzugten Ausführungsform der Erfindung. Wie in Fig. 4 angedeutet, wird mit der Vorrichtung 400 beispielhaft die Überstromsteuerung 150 mit dem Überstrom-Messglied 152 und dem Halteglied 154 gemäß den Fig. 1 und 2 realisiert, ebenso das Resetglied 270 gemäß Fig. 2.

Die Vorrichtung 400 hat eingangsseitig eine Leitung 450, welche über den Messwiderstand 242 mit der "oberen Seite" der Endstufe 122 (nicht dargestellt) verbunden ist, wie mit einem Pfeil 402 angedeutet ist, und andererseits mit dem Emitter eines pnp-Transistors 416. Die "obere Seite" der nicht dargestellten Endstufe 122 ist über einen Widerstand 412 mit der Basis des pnp-Transistors 416 verbunden. Diese Basis ist über einen Widerstand 414 mit dem Emitter verbunden. Der Kollektor des Transistors 416 ist über einen Widerstand 422 mit dem nicht-invertierenden Eingang (+) eines Differenzverstärkers 424 verbunden, welcher über eine Parallelschaltung aus einem Widerstand 426 und einer Zenerdiode 428 mit Masse verbunden ist, wobei die Anode der Zenerdiode 248 an Masse angeschlossen ist. Der invertierende Eingang (-) des Differenzverstärkers 424 ist mit einem Knotenpunkt 431 verbunden, welcher über einen Widerstand 421 mit einer Bezugsspannungsquelle 427 und über einen Widerstand 423 mit Masse verbunden ist. Die Widerstände 242, 412, 414, 421, 422, 423, 426, die Bezugsspannungsquelle 427, der pnp-Transistor 416 und die Zenerdiode 428 implementieren das Überstrom-Messglied 152.

Der Ausgang des Differenzverstärkers 424 ist einerseits mit einem Knotenpunkt 433 in einer Leitung 435 verbunden, und andererseits über einen Widerstand 425 auf seinen nicht-invertierenden Eingang (+) zurück gekoppelt. Der Knotenpunkt 433 ist über einen Widerstand 429 mit einer Bezugsspannungsquelle 430 verbunden. Der Differenzverstärker 424, die Widerstände 425, 429 und die Bezugsspannungsquelle 430 bilden gemäß einer bevorzugten Ausführungsform das Halteglied 154.

Der Knotenpunkt 433 ist mit dem Kollektor eines npn-Transistors 434 verbunden, dessen Emitter-Anschluss mit Masse verbunden ist. Der Basis-Anschluss des npn-Transistors 434 ist über einen Widerstand 432 mit einer Leitung 460 verbunden. Der npn-Transistor 434 und der Widerstand 432 bilden gemäß einer bevorzugten Ausführungsform das Resetglied 270.

Beim Betrieb der Vorrichtung 400 wird eine am Widerstand 242 abfallende Spannung über den Widerstand 412 der Basis des Transistors 416 zugeführt. Beim Auftreten eines Überstroms wird der Transistor 416 leitend geschaltet, so dass über einen von den Widerständen 422 und 426 gebildeten ersten Spannungsteiler das Potenzial am nicht-invertierenden Eingang (+) des Differenzverstärkers 424 vergrößert werden kann. Am invertierenden Eingang (-) des Differenzverstärkers 424 liegt eine im Wesentlichen konstante Grenzwertspannung an, welche von der Bezugsspannungsquelle 427 und einem von den Widerständen 421 und 423 gebildeten zweiten Spannungsteiler erzeugt wird. Dadurch wird der Ausgang des Differenzverstärkers 424 auf TRISTATE geschaltet, da beim Auftreten eines Überstroms das Potenzial am nicht-invertierenden Eingang (+) des Differenzverstärkers 424 größer wird als das Potenzial an dessen invertierendem Eingang (-). Dieser wird somit hochohmig, wodurch ein Überstromsignal OC_UPPER erzeugt wird, welches über die Leitung 435 vom Halteglied 154 ausgegeben wird. Die Funktionsweise des Halteglieds 154 (Fig. 4), d.h., des Differenzverstärkers 424, des Rückkopplungswiderstands 425, des Widerstands 429 und der Bezugsspannungsquelle 430, entspricht der Funktionsweise der entsprechenden Elemente des bei Fig. 3 beschriebenen Halteglieds 154 und wird hier deshalb nicht im Detail beschrieben.

Gemäß Fig. 4 wird das Resetsignal RESET_UPPER über die Leitung 460 und den Widerstand 432 der Basis des Transistors 434 zugeführt. Hierbei wird dieser durch das Signal RESET_UPPER leitend geschaltet, so dass der Knotenpunkt 433 auf Masse gezogen wird. Ebenso wird der nicht-invertierende Eingang (+) des Differenzverstärkers 424 auf Masse gezogen, wodurch das Halteglied 154 bzw. die Überstromsteuerung 150 zurückgesetzt wird.

Die Verwendung der Transistoren 416 und 434 erlaubt eine präzise Erfassung von Überströmen, welche auf Grund der Schaltungseigenschaften dieser Transistoren in Bezug auf die in Fig. 3 beschriebene Schaltung weiter verbessert werden kann. Die Transistoren 416 und 434 ermöglichen hierbei eine Reduzierung der Reaktionszeiten der Überstromsteuerung 150 und des Resetgliedes 270.

Die Schaltung gemäß Fig. 4 ist vorteilhaft gegenüber der Schaltung gemäß Fig. 3, da sie durch die Verwendung des Transistors 416 kaum durch in der Produktion auftretende Toleranzen der Widerstände beeinflusst wird.

**Fig. 5** zeigt ein vereinfachtes Schaltbild einer beispielhaften Vorrichtung 500 zur Steuerung von oberen und unteren Brückentransistoren einer Endstufe, z.B. der MOSFETs 212, 214, 216, 222, 224, 226 der Endstufe 122 aus Fig. 1 bis 3, die beispielhaft mit ihren integrierten Freilaufdioden dargestellt sind. Die Vorrichtung 500 ist zur Verarbeitung eines Überstromsignals OC ausgebildet, welches sowohl ein Überstromsignal OC_UPPER gemäß den Fig. 1 bis 4 als auch ein Überstromsignal OC_LOWER gemäß den Fig. 1 bis 3 sein kann und deshalb in Fig. 5 nur als das Überstromsignal OC bezeichnet wird.

Die Vorrichtung 500 hat eingangsseitig eine Versorgungsspannungsquelle +U_B, welche über eine Parallelschaltung aus zwei Zwischenkreis-Kondensatoren 502, 504 mit Masse GND und über einen Widerstand 506 mit einer Leitung 508 verbunden ist. Letztere ist mit drei Einrichtungen 510, 580, 590 zur Signalaufbereitung verbunden und dient ausgangsseitig zum Anschluss der Überstromsteuerung 150 gemäß Fig. 1 bis 4.

Die drei Einrichtungen 510, 580, 590 realisieren erfindungsgemäß die Kommutierungssteuerung 280 von Fig. 2 und dienen zur Aufbereitung entsprechender, von dem Kommutierungssignalgenerator 234 der FIG. 2 erzeugter Kommutierungssignale, in Reaktion auf das Überstromsignal OC. Hierbei dient die Einrichtung 580 zur Aufbereitung der Kommutierungssignale O1 und U1 für die zugeordneten MOSFETs 212, 222, welche mit dem Anschluss U des (nicht dargestellten) Stators der Statoranordnung 201 (Fig. 2) verbunden sind. Die Einrichtung 510 dient zur Aufbereitung der Kommutierungssignale O2 und U2 für die zugeordneten MOSFETs 214, 224, welche mit dem Anschluss V des (nicht dargestellten) Stators der Statoranordnung 201 (Fig. 2) verbunden sind. Die Signalaufbereitungseinrichtung 590 dient zur Aufbereitung der Kommutierungssignale O3 und U3 für die zugeordneten MOSFETs 216, 226, welche mit dem Anschluss W des (nicht dargestellten) Stators der Statoranordnung 201 verbunden sind. Wie Fig. 5 zeigt, haben die Einrichtungen 510, 580, 590 zur Signalaufbereitung einen identischen Aufbau, so dass im Folgenden zur Vereinfachung nur der Aufbau der Signalaufbereitungseinrichtung 510 näher erläutert wird.

Die Einrichtung 510 hat eine Leitung 552, die eingangsseitig über einen Knotenpunkt 554 mit der Leitung 508 und ausgangsseitig mit der Source des Brückentransistors 214 verbunden ist. Die Leitung 552 ist über eine Parallelschaltung einer Zenerdiode 542, deren Katode mit der Leitung 552 verbunden ist, eines Widerstands 544, und eines Kondensators 546 mit dem Gate des MOSFET 214 verbunden. Dieses Gate ist über einen Widerstand 532 mit dem Kollektor eines npn-Transistors 520 verbunden. Die Basis des Transistors 520 ist einerseits über einen Widerstand 516 mit dessen Emitter und über einen Widerstand 512 mit einem Anschluss für das Kommutierungssignal 02 verbunden. Der Emitter des Transistors 520 ist über einen Widerstand 514 mit einem Anschluss für das Überstromsignal OC verbunden. Der Anschluss für das Kommutierungssignal 02 ist mit einem IC 518 verbunden, der auch mit einem Anschluss für das Kommutierungssignal U2 und dem Anschluss für das Überstromsignal OC verbunden ist. Ausgangsseitig ist der IC 518 mit dem Gate G des unteren Brückentransistors 224 verbunden

Die Drain-Anschlüsse D der MOSFETs 214, 224 sind mit dem Wicklungsanschluss V verbunden. Die Source S des MOSFET 224 ist mit einer Leitung 560 verbunden, die einerseits mit einem Anschluss OUT1 und andererseits mit einer Leitung 562 verbunden ist. Die Leitung 562 ist über einen Messwiderstand 572 mit Masse GND (Shunt) und über einen Widerstand 574 mit einem Anschluss OUT2 verbunden. Letzterer ist über einen Kondensator 576 mit Masse GND verbunden. Das am Anschluss OUT2 erzeugte Signal entspricht im Wesentlichen der an dem Widerstand 572 abfallenden Spannung und ist somit ein Maß für den durch die Endstufe fließenden Strom. Der Anschluss OUT2 ist mit der in dieser Figur nicht dargestellten Steuerung 130 gemäß Fig. 1 und 2 verbunden, wobei die an diesem Anschluss erzeugten Signale bei der Generierung der Kommutierungssignale Anwendung finden.

Im Betrieb der Vorrichtung 500 wird beim Auftreten eines Überstromes aufgrund eines Kurzschlusses das Überstromsignal OC erzeugt und den Einrichtungen 510, 580, 590 zur Signalaufbereitung zugeführt. In der Einrichtung 510 wird der npn-Transistor 520 in Reaktion auf das Überstromsignal OC nichtleitend geschaltet, da durch das Überstromsignal OC der Emitter des Transistors 520 auf "HIGH" gesetzt wird. Hierdurch wird das Potenzial am Gate des oberen Brückentransistors 214 reduziert, wodurch dieser nichtleitend gesteuert wird.

Der IC 518 ist derart ausgebildet, dass er in Reaktion auf das Überstromsignal OC das Gate des unteren Brückentransistors 224 derart ansteuert, dass dieser ebenfalls nichtleitend gesteuert wird.

Analog werden in Reaktion auf das Überstromsignal OC auch die anderen Brückentransistoren 212, 222, 216, 226 nichtleitend gesteuert, so dass die Endstufe 122 abgeschaltet wird und der (nicht dargestellte) ECM 120 in den stromlosen Zustand übergeht. Somit können durch das Abschalten der Endstufe 122 die Endstufe und der ECM vor einer Beschädigung oder Zerstörung durch einen aufgrund des Kurzschlusses entstehenden Überstrom geschützt werden. -- Naturgemäß sind im Rahmen der vorliegenden Erfindung vielfache Abwandlungen und Modifikationen möglich.

## Patentansprüche

1. Elektronisch kommutierter Motor, welcher aufweist:
Einen Rotor (208);
einen mit dem Rotor (208) in elektromagnetischer Wechselwirkung stehenden Stator (201), welcher mit einer Statorwicklung (202, 204, 206) versehen ist;
eine Endstufe (122) zum Steuern der im Betrieb in der Statorwicklung (202, 204, 206) fließenden Ströme;
mindestens ein Strommessglied (242, 244) zum Erfassen eines Messwerts für die in der Endstufe (122) fließenden Ströme (I_UPPER, I_LOWER);
und ein Überstrom-Messglied (152, 162) zum Auswerten eines zugeordneten Messwerts und zum Erfassen eines einen vorgegebenen Grenzwert (I_MAX_UPPER, I_MAX_LOWER) betragsmäßig überschreitenden Stromes;
ein dem Überstrom-Messglied (152, 162) zugeordnetes Halteglied (154, 164), welches dazu ausgebildet ist, bei Auftreten eines Überstroms im zugeordneten Strommessglied (242, 244) ein Überstromsignal (OC_UPPER, OC_LOWER) zu erzeugen und während einer vorgegebenen Zeitspanne zu speichern, und der Endstufe (122) ein entsprechendes Signal zuzuführen, um dort dem Überstrom entgegen zu wirken,
wobei eine vom Halteglied (154, 164) gesteuerte Steuerschaltung (280) vorgesehen ist, welche dazu ausgebildet ist, bei Auftreten des Überstroms die Endstufe (122) abzuschalten, um eine Beschädigung von Motor und Motorelektronik durch den erfassten Überstrom zu verhindern,
und wobei ein Resetglied (270, 290) vorgesehen ist, welches dazu ausgebildet ist, das Halteglied (154, 164) nach der vorgegebenen Zeitspanne zurück zu setzen.

2. Motor nach Anspruch 1, bei welchem das Resetglied (270, 290) dazu ausgebildet ist, das Halteglied (154, 164) in Antwort auf eine externe Aktivierung des Resetgliedes zurück zu setzen.

3. Motor nach Anspruch 1 oder 2, bei welchem das Halteglied einen Differenzverstärker (342, 382, 424) aufweist, welcher einen Eingang und einen Ausgang aufweist und dazu ausgebildet ist, ein vom Strom im Strommessglied (242, 244) abgeleitetes Signal mit einem Maximalwert zu vergleichen und bei Überschreitung des Maximalwertes ein Überstromsignal (OC_UPPER, OC_LOWER) zu erzeugen.

4. Motor nach Anspruch 3, bei welchem der Ausgang des Differenzverstärkers (342, 382, 424) zu seinem nicht-invertierenden Eingang (+) zurückgekoppelt ist, um bei Erzeugung des Überstromsignals am Ausgang des Differenzverstärkers über die Rückkopplung eine Selbsthaltung zu bewirken.

5. Motor nach einem der vorhergehenden Ansprüche, bei welchem das Strommessglied (242, 244) als Messwiderstand ausgebildet ist.

6. Motor nach einem der vorhergehenden Ansprüche, bei welchem das Strommessglied (242, 244) zwischen einer Versorgungsspannungsquelle (+U_B, GND) und der Endstufe (122) angeordnet ist und zur Erfassung eines den Endstufenstrom beschreibenden Signals dient.

7. Motor nach einem der vorhergehenden Ansprüche, bei welchem die Endstufe (122) mindestens einen Halbleiterschalter aufweist, welcher zumindest zeitweise bei Auftreten eines Überstromsignals abschaltbar ist.

8. Motor nach einem der vorhergehenden Ansprüche, dessen Statorwicklung mindestens einen Statorstrang (202, 204, 206) aufweist, wobei die Endstufe zur Ansteuerung dieses mindestens einen Statorstrangs eine Vollbrücke mit oberen und unteren Halbleiterschaltern (212, 214, 216, 222, 224, 226) aufweist, und die Steuerschaltung (280) dazu ausgebildet ist, zur Abschaltung der Endstufe die oberen und unteren Halbleiterschalter (212, 214, 216, 222, 224, 226) nichtleitend zu steuern.

9. Motor nach Anspruch 8, bei welchem mindestens ein erstes Überstrom-Messglied (162) an einen zwischen den unteren Halbleiterschaltern (222, 224, 226) und Masse angeordneten ersten Messwiderstand (244) angeschlossen ist zwecks Erfassung eines ersten den Endstufenstrom beschreibenden Signals, und mindestens ein zweites Überstrom-Messglied (152) an einen zwischen einer Versorgungsspannungsquelle (+U_B) und den oberen Halbleiterschaltern (222, 224, 226) angeordneten zweiten Messwiderstand (242) angeschlossen ist zwecks Erfassung eines zweiten den Endstufenstrom beschreibenden Signals.

10. Motor nach Anspruch 9, bei welchem dem ersten Überstrom-Messglied (162) ein erstes Halteglied (164) zugeordnet ist, welches dazu ausgebildet ist, ein erstes Überstromsignal (OC_LOWER) zu erzeugen, wenn an dem ersten Messwiderstand (244) ein Überstrom erfasst wird, und dem zweiten Überstrom-Messglied (152) ein zweites Halteglied (154) zugeordnet ist, welches dazu ausgebildet ist, ein zweites Überstromsignal (OC_UPPER) zu erzeugen, wenn an dem zweiten Messwiderstand (242) ein Überstrom erfasst wird.

11. Motor nach Anspruch 10, bei welchem das erste und das zweite Halteglied (164, 154) jeweils mit der Steuerschaltung (280) verbunden ist, welche dazu ausgebildet ist, beim Empfang mindestens eines des ersten und zweiten Überstromsignals (OC_LOWER, OC_UPPER) die Endstufe des Motors abzuschalten.

12. Motor nach einem der vorhergehenden Ansprüche, bei welchem die Erzeugung des Überstromsignals (OC_UPPER, OC_LOWER) durch das Überstrom-Messglied (152, 162) aus dem erfassten Messwert innerhalb von 500 ns erfolgt.

13. Verfahren zur Steuerung eines elektronisch kommutierten Motors,
welcher einen Rotor (208) und einen mit dem Rotor (208) in elektromagnetischer Wechselwirkung stehenden Stator (201), welcher mit einer Statorwicklung (202, 204, 206) versehen ist, aufweist;
welchem Motor eine Endstufe (122) zum Steuern der im Betrieb in der Statorwicklung (202, 204, 206) fließenden Ströme zugeordnet ist;
welches Verfahren folgende Schritte aufweist:
A) ein Messwert für mindestens einen in der Endstufe (122) fließenden Strom (I_UPPER; I_LOWER) wird erfasst;
B) der Messwert wird mit einem vorgegebenen Grenzwert (I_MAX_UPPER; I_MAX_LOWER) verglichen;
C) wenn der Messwert den vorgegebenen Grenzwert überschreitet, wird aus dem Messwert ein betragsmäßig den vorgegebenen Grenzwert überschreitender Überstrom bestimmt;
D) bei Auftreten eines Überstroms wird ein Überstromsignal (OC_UPPER, OC_LOWER) erzeugt;
E) das Überstromsignal wird bei seinem Auftreten während einer vorgegebenen Zeitspanne gespeichert;
F) der Endstufe (122) wird ein dem Überstromsignal entsprechendes Signal zugeführt, um dort dem Überstrom entgegen zu wirken, wobei die Endstufe (122) beim Auftreten eines Überstroms abgeschaltet wird, um eine Beschädigung des Motors und dessen Elektronik durch den erfassten Überstrom zu verhindern;
G) ein Resetsignal (RESET_UPPER, RESET_LOWER) zur Löschung des Überstromsignals wird nach einer vorgegebenen Zeitspanne erzeugt.

14. Verfahren nach Anspruch 13, bei welchem das Resetsignal (RESET_UPPER, RESET_LOWER) in Antwort auf eine externe Anweisung erzeugt wird.

## Claims

1. Electronically commutated motor comprising:
a rotor (208);
a stator (201) which electromagnetically interacts with the rotor (208) and is provided with a stator winding (202, 204, 206);
a power stage (122) for controlling the currents flowing in the stator winding (202, 204, 206) during operation;
at least one current measuring element (242, 244) for detecting a measured value for the currents (I_UPPER, I_LOWER) flowing in the power stage (122);
and an overcurrent measuring element (152, 162) for evaluating an associated measured value and for detecting a current of which the absolute value exceeds a predetermined limit value (I_MAX_UPPER, I_MAX_LOWER);
a holding element (154, 164) which is associated with the overcurrent measuring element (152, 162) and designed to, in the event of an overcurrent in the associated current measuring element (242, 244), generate an overcurrent signal (OC_UPPER, OC_LOWER), store said signal for a predetermined time period, and deliver a corresponding signal to the power stage (122) in order to counteract the overcurrent at that point,
wherein a control circuit (280) is provided which is controlled by the holding element (154, 164) and designed to switch off the power stage (122) in the event of an overcurrent, in order to prevent damage to the motor and the motor electronics by the detected overcurrent, and wherein a reset element (270, 290) is provided and designed to reset the holding element (154, 164) after the predetermined time period.

2. Motor according to claim 1, in which the reset element (270, 290) is designed to reset the holding element (154, 164) in response to an external activation of the reset element.

3. Motor according to either claim 1 or claim 2, in which the holding element comprises a differential amplifier (342, 382, 424) which has an input and an output and is designed to compare a signal derived from the current in the current measuring element (242, 244) with a maximum value, and to generate an overcurrent signal (OC_UPPER, OC_LOWER) when the maximum value is exceeded.

4. Motor according to claim 3, in which the output of the differential amplifier (342, 382, 424) is fed back to its non-inverting input (+) in order to bring about self-holding, by way of the feedback, upon generation of the overcurrent signal at the output of the differential amplifier.

5. Motor according to any of the preceding claims, in which the current measuring element (242, 244) is formed as a measuring resistor.

6. Motor according to any of the preceding claims, in which the current measuring element (242, 244) is arranged between a supply voltage source (+U_B, GND) and the power stage (122) and serves to detect a signal describing the power-stage current.

7. Motor according to any of the preceding claims, in which the power stage (122) comprises at least one semiconductor switch that can be switched off, at least temporarily, in the event of an overcurrent signal.

8. Motor according to any of the preceding claims, the stator winding of which has at least one stator phase (202, 204, 206), wherein, for controlling said at least one stator phase, the power stage has a full bridge having upper and lower semiconductor switches (212, 214, 216, 222, 224, 226), and the control circuit (280) is designed to render the upper and lower semiconductor switches (212, 214, 216, 222, 224, 226) non-conductive, in order to switch off the power stage.

9. Motor according to claim 8, in which at least one first overcurrent measuring element (162) is connected to a first measuring resistor (244), arranged between the lower semiconductor switches (222, 224, 226) and ground, for the purpose of detecting a first signal describing the power-stage current, and at least one second overcurrent measuring element (152) is connected to a second measuring resistor (242), arranged between a supply voltage source (+U_B) and the upper semiconductor switches (222, 224, 226), for the purpose of detecting a second signal describing the power-stage current.

10. Motor according to claim 9, in which a first holding element (164), which is designed to generate a first overcurrent signal (OC_LOWER) when an overcurrent is detected at the first measuring resistor (244), is associated with the first overcurrent measuring element (162), and a second holding element (154), which is designed to generate a second overcurrent signal (OC_UPPER) when an overcurrent is detected at the second measuring resistor (242), is associated with the second overcurrent measuring element (152).

11. Motor according to claim 10, in which the first and the second holding element (164, 154) are each connected to the control circuit (280), which is designed to switch off the power stage of the motor upon receipt of at least one of the first and the second overcurrent signals (OC_LOWER, OC_UPPER).

12. Motor according to any of the preceding claims, in which the overcurrent signal (OC_UPPER, OC_LOWER) is generated by the overcurrent measuring element (152, 162) from the detected measured value within 500 ns.

13. Method for controlling an electronically commutated motor having:
a rotor (208) and a stator (201) which electromagnetically interacts with the rotor (208) and is provided with a stator winding (202, 204, 206);
with which motor there is associated a power stage (122) for controlling the currents flowing in the stator winding (202, 204, 206) during operation;
which method comprises the steps of:
A) detecting a measured value for at least one current (I_UPPER; I_LOWER) flowing in the power stage (122);
B) comparing the measured value with a predetermined limit value (I_MAX_UPPER; I_MAX_LOWER);
C) determining from the measured value an overcurrent of which the absolute value exceeds the predetermined limit value if the measured value exceeds the predetermined limit value;
D) generating an overcurrent signal (OC_UPPER, OC_LOWER) in the event of an overcurrent;
E) storing the overcurrent signal for a predetermined time period when said signal occurs;
F) delivering to the power stage (122) a signal corresponding to the overcurrent signal in order to counteract the overcurrent at that point, wherein the power stage (122) is switched off in the event of an overcurrent in order to prevent damage to the motor and to the electronics thereof by the detected overcurrent;
G) generating a reset signal (RESET_UPPER, RESET_LOWER) after a predetermined time period in order to cancel the overcurrent signal.

14. Method according to claim 13, in which the reset signal (RESET_UPPER, RESET_LOWER) is generated in response to an external instruction.

## Revendications

1. Moteur à commutation électronique, lequel présente :
un rotor (208) ;
un stator (201) en interaction électromagnétique avec le rotor (208), lequel est pourvu d'un enroulement statorique (202, 204, 206) ;
un étage final (122) pour commander les courants qui circulent dans l'enroulement statorique (202, 204, 206) pendant le fonctionnement ;
au moins un organe de mesure de courant (242, 244) pour détecter une valeur de mesure des courants (I_UPPER, I_LOWER) qui circulent dans l'étage final (122);
et un organe de mesure de surintensité (152, 162) pour évaluer une valeur de mesure associée et pour détecter un courant dépassant en valeur absolue une valeur limite prédéfinie (I_MAX_UPPER, I_MAX_LOWER) ;
un organe de maintien (154, 164) associé à l'organe de mesure de surintensité (152, 162), lequel est conçu pour, en cas d'apparition d'une surintensité dans l'organe de mesure de courant (242, 244) associé, générer et mémoriser pendant un intervalle de temps prédéfini un signal de surintensité (OC_UPPER, OC_LOWER), et amener un signal correspondant à l'étage final (122) pour s'y opposer à la surintensité,
un circuit de commande (280) commandé par l'organe de maintien (154, 164) étant prévu, lequel est conçu pour, en cas d'apparition de la surintensité, désactiver l'étage final (122) afin d'empêcher un endommagement du moteur et de l'électronique du moteur par la surintensité détectée,
et un organe de réinitialisation (270, 290) étant prévu, lequel est conçu pour réinitialiser l'organe de maintien (154, 164) après l'intervalle de temps prédéfini.

2. Moteur selon la revendication 1, dans lequel l'organe de réinitialisation (270, 290) est conçu pour réinitialiser l'organe de maintien (154, 164) en réponse à une activation externe de l'organe de réinitialisation.

3. Moteur selon l'une des revendications 1 ou 2, dans lequel l'organe de maintien est un amplificateur différentiel (342, 382, 424), lequel présente une entrée et une sortie et est conçu pour comparer un signal dérivé du courant dans l'organe de mesure de courant (242, 244) avec une valeur maximum et pour générer un signal de surintensité (OC_UPPER, OC_LOWER) en cas de dépassement de la valeur maximum.

4. Moteur selon la revendication 3, dans lequel la sortie de l'amplificateur différentiel (342, 382, 424) est réinjectée dans son entrée non inverseuse (+) pour produire, par la rétroaction, un auto-maintien en cas de génération du signal de surintensité à la sortie de l'amplificateur différentiel.

5. Moteur selon l'une des revendications précédentes, dans lequel l'organe de mesure de courant (242, 244) est réalisé sous la forme d'une résistance de mesure.

6. Moteur selon l'une des revendications précédentes, dans lequel l'organe de mesure de courant (242, 244) est disposé entre une source de tension d'alimentation (+U_B, GND) et l'étage final (122) et sert à détecter un signal décrivant le courant de l'étage final.

7. Moteur selon l'une des revendications précédentes, dans lequel l'étage final (122) présente au moins un commutateur à semi-conducteurs, lequel peut être désactivé au moins temporairement en cas d'apparition d'un signal de surintensité.

8. Moteur selon l'une des revendications précédentes, dont l'enroulement statorique présente au moins une branche statorique (202, 204, 206), l'étage final présentant un pont intégral formé de commutateurs à semi-conducteurs supérieurs et inférieurs (212, 214, 216, 222, 224, 226) pour commander ladite au moins une branche statorique, et le circuit de commande (280) étant conçu pour rendre les commutateurs à semi-conducteurs supérieurs et inférieurs (212, 214, 216, 222, 224, 226) non conducteurs afin de désactiver l'étage final.

9. Moteur selon la revendication 8, dans lequel au moins un premier organe de mesure de surintensité (162) est raccordé à une première résistance de mesure (244) disposée entre les commutateurs à semi-conducteurs inférieurs (222, 224, 226) et la masse pour détecter un premier signal décrivant le courant de l'étage final, et au moins un deuxième organe de mesure de surintensité (152) est raccordé à une deuxième résistance de mesure (242) disposée entre une source de tension d'alimentation (+U_B) et les commutateurs à semi-conducteurs supérieurs (222, 224, 226) pour détecter un deuxième signal décrivant le courant de l'étage final.

10. Moteur selon la revendication 9, dans lequel un premier organe de maintien (164) est associé au premier organe de mesure de surintensité (162), lequel est conçu pour générer un premier signal de surintensité (OC_LOWER) quand une surintensité est détectée à la première résistance de mesure (244), et un deuxième organe de maintien (154) est associé au deuxième organe de mesure de surintensité (152), lequel est conçu pour générer un deuxième signal de surintensité (OC_UPPER) quand une surintensité est détectée à la deuxième résistance de mesure (242).

11. Moteur selon la revendication 10, dans lequel le premier et le deuxième organe de maintien (164, 154) sont reliés chacun au circuit de commande (280), lequel est conçu pour désactiver l'étage final du moteur en cas de réception du premier et/ou du deuxième signal de surintensité (OC_LOWER, OC_UPPER).

12. Moteur selon l'une des revendications précédentes, dans lequel la génération du signal de surintensité (OC_UPPER, OC_LOWER) par l'organe de mesure de surintensité (152, 162) à partir de la valeur de mesure détectée s'effectue en moins de 500 ns.

13. Procédé de commande d'un moteur à commutation électronique,
lequel présente un rotor (208) et un stator (201) en interaction électromagnétique avec le rotor (208), lequel est pourvu d'un enroulement statorique (202, 204, 206) ;
auquel moteur est associé un étage final (122) pour commander les courants qui circulent dans l'enroulement statorique (202, 204, 206) pendant le fonctionnement ;
lequel procédé présente les étapes suivantes :
A) une valeur de mesure d'au moins un courant (I_UPPER ; I_LOWER) circulant dans l'étage final (122) est détectée ;
B) la valeur de mesure est comparée avec une valeur limite prédéfinie (I_MAX_UPPER; I_MAX_LOWER) ;
C) si la valeur de mesure dépasse la valeur limite prédéfinie, une surintensité dépassant la valeur limite prédéfinie en valeur absolue est déterminée à partir de la valeur de mesure ;
D) en cas d'apparition d'une surintensité, un signal de surintensité (OC_UPPER, OC_LOWER) est généré ;
E) le signal de surintensité est mémorisé pendant un intervalle de temps donné lors de son apparition ;
F) un signal correspondant au signal de surintensité est amené à l'étage final (122) pour s'y opposer à la surintensité, l'étage final (122) étant désactivé en cas d'apparition d'une surintensité afin d'empêcher un endommagement du moteur et de son électronique par la surintensité détectée ;
G) un signal de réinitialisation (RESET_UPPER, RESET_LOWER) pour annuler le signal de surintensité est généré après un intervalle de temps prédéfini.

14. Procédé selon la revendication 13, selon lequel le signal de réinitialisation (RESET_UPPER, RESET_LOWER) est généré en réponse à une instruction externe.
